Europäisches Patentamt

(19) European Patent Office

Office européen des brevets

(11) Publication number: **0 111 391**
**B1**

# EUROPEAN PATENT SPECIFICATION

(12)

(45) Date of publication of patent specification: **02.03.88**

(21) Application number: **83306774.7**

(22) Date of filing: **07.11.83**

(51) Int. Cl.⁴: **C 08 C 19/08,** C 08 F 8/50

(54) **Polymer molecular weight reduction process.**

<table>
<tr><td>

(30) Priority: **10.11.82 CA 415313**

(43) Date of publication of application:
**20.06.84 Bulletin 84/25**

(45) Publication of the grant of the patent:
**02.03.88 Bulletin 88/09**

(84) Designated Contracting States:
**BE DE FR GB IT**

(56) References cited:
**FR-A-1 472 411**
**FR-A-1 567 125**

**CHEMICAL ABSTRACTS, vol. 89, 1978, page 28,
no. 75883m, Columbus, Ohio, US; & JP - A - 78
13 669 (FURUKAWA ELECTRIC CO., LTD.)
11-05-1978**

</td><td>

(73) Proprietor: **POLYSAR LIMITED
Sarnia Ontario N7T 7M2 (CA)**

(72) Inventor: **Edwards, Douglas Cameron
1731 Rutherglen Close
Sarnia Ontario (CA)**

(74) Representative: **Perry, Robert Edward et al
GILL JENNINGS & EVERY 53-64 Chancery Lane
London WC2A 1HN (GB)**

</td></tr>
</table>

Courier Press, Leamington Spa, England.

# 0 111 391

**Description**

This invention relates to polymer modification and, in particular, to a process of reducing the molecular weight of a polymer.

It is well known to treat polymers with an ozone-containing gas, to produce polymers of lower molecular weight, the polymer being in solution. See, for example, GB—A—0984071 and US—A—3392154. It is also well known that rubbery vulcanisates crack when exposed to an atmosphere containing ozone, but only when the rubbery vulcanisate is subjected to strain, e.g. by elongation.

GB—A—0883791 discloses a process for making graft-type polymers, which comprises introducing oxygenated groups into the base polymer, following which a polymerisable monomer is added and the oxygenated groups are decomposed to cause polymerisation and grafting of the monomer on to the base polymer. For example, a polymer is masticated in the presence of ozone, monomer is mixed with the ozonised polymer, and the mixture is heated to cause grafting of the monomer on to the original polymer.

FR—A—1472411 discloses a process for the production of oxidised, thermoplastic polyolefins. The polyolefins suitable for use are high, medium and low density polyethylenes or a copolymer of ethylene (90 to 99 parts by weight) and butene-1 (1 to 10 parts by weight). Specifically, the invention of the citations is directed toward exposing the polymer, in bulk form or suspension, to a gas containing free oxygen in the presence of ozone, which acts as an oxidation initiator. The process is carried out at a temperature of at least 20°C to less than the melting point of the polymer and it continues until the polymer has a carboxyl content of 0.025—2 meq/g polymer.

According to the invention, in a process for reducing the molecular weight of a polymer, a polymer in bulk form and selected from rubbery synthetic unsaturated polymers and natural rubber is subjected to mastication with a rubber mixing and masticating means at a temperature of from about 20° to about 220°C while being exposed to and in contact with a stream containing from 0.1 to 4 volume percent of ozone in air or oxygen for a time sufficient to produce a polymer having a lower molecular weight than the starting polymer.

In the process of the invention, the mastication of the polymer is an important feature. The mastication leads to the continuous formation of new surfaces of the bulk polymer under conditions of strain. As is well known for any rubber mixing and masticating means, the polymer is sheared such that it is continuously being elongated and thereby is under strain, and is continuously being broken and thereby new surfaces are formed. Suitable such mixing and masticating means include the various internal mixers and extruders. Any internal mixer may be used which can cause mastication by shearing and mixing of the polymer and includes the Banbury-type mixers and the trough-type blade mixers equipped with sigma- or Z-blades to provide the shearing and mixing. Such internal mixers are equipped with means to feed in the atmosphere containing ozone, to contain the atmosphere containing ozone in the mixer and to encourage mixing of said atmosphere with freshly formed strained surfaces of the polymer. Extruders may be used which have single or twin extruder screws, with twin screws being preferred, to cause shearing of the polymer, and may be equipped with mixing and shearing components along the length of the extruder screw. Such mixing extruders are equipped with one or more means to feed into the polymer in the extruder the atmosphere containing ozone, so that the ozone is mixed with the polymer and is available for reaction with the polymer at the freshly formed strained surfaces as a result of the shearing of the polymer within the extruder. It is necessary that the masticated polymer be exposed to and in contact with an atmosphere containing ozone. One of ordinary skill in the art can readily design an extruder for use as such mixing and masticating means; commercially available extruders are known in which the configuration of the screw or screws is varied along the length of the screw to provide both feeding and shearing sections. Suitable L/D ratios for the screw can readily be determined—a preferred L/D ratio is not less than 10 and preferably not less than 20. Preferably, such an extruder will be equipped with suitable vent ports to remove any unreacted ozone and the atmosphere which contained the ozone. Most preferably, the extruder will be equipped with a devolatilizing section, preferably a vacuum devolatilizing section, at a terminal section of the extruder in order to readily remove any volatile materials existing in the polymer. For safety and environmental reasons, it may be desirable to provide suitable vent means for removing any residual ozone-containing gas. Suitable means for generating ozone in a stream of oxygen or air herein described as "atmospheric" are well known and usually operate by an electric discharge through the oxygen or air. Concentrations of ozone in the oxygen or air are from 0.1 to 4 volume percent, preferably from 0.3 to 2 volume percent. The temperature of the atmosphere containing ozone as supplied to the mixing and masticating means is suitably from 15° to 40°C. It is not essential that the temperature of the polymer during mixing and mastication be controlled. Preferably, the temperature of the polymer is from 20° to 220°C. The temperature may be controlled by the well known methods of supplying cold water or hot water or steam to the mastication means. For an internal mixer, the polymer temperature is preferably from about 20° to 100°C; for an extruder, the polymer temperature is preferably from 100° to 180°C. The rate at which polymer is fed to the extruder, the revolutions per minute of the extruder screw(s), the rate at which the atmosphere containing ozone is supplied to the extruder and the temperature of the extruder all appear to influence, in an unknown manner, the nature of the product.

The polymers which are used are selected from rubbery synthetic unsaturated polymers and natural rubber. Suitable such rubbery synthetic unsaturated polymers are polymers comprising $C_4$—$C_6$ conjugated

2

diolefins and include polymers of $C_4$—$C_6$ conjugated diolefins, polymers of isobutylene and $C_4$—$C_6$ conjugated diolefins, polymers of isobutylene, $C_4$—$C_6$ conjugated diolefins and monomers containing at least two carbon-carbon double bonds which cause crosslinking of the polymer during polymerization, brominated and chlorinated polymers of isobutylene and $C_4$—$C_6$ conjugated diolefins, polymers of $C_4$—$C_6$ conjugated diolefins and vinyl or vinylidene substituted aromatic hydrocarbons, and polymers of $C_4$—$C_6$ conjugated diolefins and $C_3$—$C_5$ unsaturated nitrile group containing monomers. Suitable polymers of $C_4$—$C_6$ conjugated diolefins include polybutadiene and polyisoprene. Polymers of isobutylene and $C_4$—$C_6$ conjugated diolefins include isobutylene-butadiene polymer, isobutylene-isoprene polymer, isobutylene-piperylene polymer and isobutylene-dimethylbutadiene polymer, especially such polymers containing from 95 to 99.5 weight percent of isobutylene, the balance being conjugated diolefin, preferably isoprene. Polymers of isobutylene, $C_4$—$C_6$ conjugated diolefins and monomers containing at least two carbon-carbon double bonds which cause crosslinking of the polymer during polymerization include isobutylene-isoprene-divinylbenzene polymer and isobutylene-isoprene-2,5-dimethyl-1,5-hexadiene polymer and especially such polymers containing from 95 to 97 weight percent of isobutylene, from 1 to 2 weight percent of isoprene and the balance being divinylbenzene or 2,5-dimethyl-1,5-hexadiene. Brominated and chlorinated polymers of isobutylene and $C_4$—$C_6$ conjugated diolefins include brominated isobutylene-isoprene copolymers, especially those containing from 0.7 to 4 weight percent of bromine, from 92.5 to 98.7 weight percent of isobutylene and from 0.6 to 3.5 weight percent of isoprene, and chlorinated isobutylene-isoprene polymers, especially those containing from 0.5 to 2 weight percent of chlorine, from 94.7 to 98.7 weight percent of isobutylene and from 0.8 to 3.3 weight percent of isoprene. Suitable polymers of $C_4$—$C_6$ conjugated diolefins and vinyl or vinylidene substituted aromatic hydrocarbons include butadiene-styrene polymers, butadiene-alphamethylstyrene polymers and butadiene-paramethylstyrene polymers, especially such polymers which contain from 60 to 85 weight percent of butadiene. Polymers of $C_4$—$C_6$ conjugated diolefins and $C_3$—$C_5$ unsaturated nitrile group containing monomers include butadiene-acrylonitrile polymers, butadiene-methacrylonitrile polymers and isoprene-acrylonitrile polymers, especially such polymers wherein the butadiene or isoprene content is from 60 to 85 weight percent. Unsaturated polymers which are preferred include isobutylene-isoprene polymers also known as butyl rubber, isobutylene-isoprene-divinylbenzene polymers, brominated isobutylene-isoprene polymers also known as bromobutyl, chlorinated isobutylene-isoprene polymers also known as chlorobutyl, butadiene-styrene polymers also known as SBR, butadiene-acrylonitrile polymers also known as NBR and natural rubber. Such unsaturated polymers suitably are solid polymers generally having a Mooney viscosity (ML 1+4 at 100°C or ML 1+8 at 125°C) of about 40 to about 90.

The product of the process is a polymer having a lower molecular weight than the starting polymer. The fluidity of the products of the process may vary over a wide range and will generally be below the fluidity or viscosity of conventional solid polymers normally encountered in the rubber industry. The products of the process may range from a semi-solid type of polymer, having a Mooney viscosity (ML4 at 100°C or ML8 at 125°C) of, for example, less than about 40, to polymers flowable at ambient temperatures. Most preferably, the products of the process have number average molecular weights ($M_n$), as determined by gel permeation chromatography, of from about 5,000 to about 35,000. The product preferably has a molecular weight of not more than about 70% and preferably not more than about 50% of the molecular weight of the starting polymer. In order to produce such products, the reaction times can be varied for both the type of mixing and masticating apparatus used and the concentration of ozone in the atmosphere containing ozone and may be from a few seconds, such as about 15 to 30 seconds, up to hours, such as about 8 to 10 hours. The reaction time, per se, is not critical.

The products of the process may be used in applications where polymers of low molecular weight may be used. Such applications include use in caulks and sealants, as rubber processing aid additives and as asphalt additives.

The following examples illustrate the scope of the invention and are not intended to limit such scope.

Example 1

A polymer (500 g) of isobutylene, isoprene and divinylbenzene having a Mooney viscosity (ML 1+8 at 125°C) of about 64 and containing about 97 to 97.5 weight percent of isobutylene and about 1.5 weight percent of isoprene was charged to a one-litre Baker Perkins sigma-blade mixer which was contained in an enclosure equipped with a gas feed line and a gas vent line. An air stream containing about 2 weight percent of ozone was supplied at a rate of about 4 litres per minute. The mixer was supplied with cooling water so that the temperature of the polymer in the mixer was maintained at between 25° and 50°C, with the rotor speeds set at 64 rpm (front rotor) and 34 rpm (back rotor).

A sample (Sample 1) was removed after a mixing and ozone exposure time of 1.5 hours and found to have a Mooney viscosity (ML 1+8 at 125°C) of 36. A further sample (Sample 2) was removed after a mixing and ozone exposure time of 2.5 hours and found to have a Mooney viscosity (ML 1+8 at 125°C) of less than 1. Sample 2 was an extremely sticky semi-solid polymer and was difficult to remove from the apparatus.

Example 2

Using the procedure described in Example 1, samples of butyl rubber and bromobutyl were treated. The butyl rubber contained about 98.5 weight percent of isobutylene and about 1.5 weight percent of isoprene and had a Mooney viscosity (ML 1+12 at 125°C) of about 50. The bromobutyl contained about 96.5 weight percent of isobutylene, about 1.5 weight percent of isoprene and about 2 weight percent of bromine and had a Mooney viscosity (ML 1+8 at 125°C) of about 46. Control experiments were also run for the butyl rubber in which the conditions were identical except that the air stream contained no ozone. The results are shown in Table 1 from which it is clear that the products of the process of this invention were polymers of reduced molecular weight whereas the butyl rubber controls showed very little reduction in molecular weight, the molecular weights having been determined by gel permeation chromatography. The polymers of Experiments 1, 2, 3 and 4 were soft semi-solid materials or viscous fluids flowable at room temperature.

### TABLE I

| Experiment number | Polymer | Mastication time (hours) | Molecular weight | |
| --- | --- | --- | --- | --- |
| | | | $M_n \times 10^{-3}$ | $M_w \times 10^{-3}$ |
| Control 1 | Butyl | 0 | 155 | 533 |
| 1 | Butyl | 2.5 | 25 | 188 |
| 2 | Butyl | 5.75 | 11 | 56 |
| Control 2 | Butyl | 2 (No ozone) | 141 | 492 |
| Control 3 | Butyl | 5.75 (No ozone) | 137 | 430 |
| Control 4 | Bromobutyl | 0 | 204 | 615 |
| 3 | Bromobutyl | 2 | 35 | 204 |
| 4 | Bromobutyl | 6 | 24 | 60 |

Example 3

Using the procedure described in Example 1, samples of styrene-butadiene, butadiene-acrylonitrile and isoprene-acrylonitrile copolymers were treated. The styrene-butadiene copolymer (identified as SBR) contained about 76 weight percent of butadiene and had a Mooney viscosity (ML 1+4 at 100°C) of about 50. The butadiene-acrylonitrile copolymer (identified as NBR) contained about 66 weight percent of butadiene and had a Mooney viscosity (ML 1+4 at 100°C) of about 50. The isoprene-acrylonitrile copolymer (identified as NIR) contained about 66 weight percent of isoprene and had a Mooney viscosity (ML 1+4 at 100°C) of about 70. The molecular weights of the polymers were determined by gel permeation chromatography. The results are shown in Table II.

### TABLE II

| Experiment number | Polymer | Mastication time (hours) | Molecular weight | |
| --- | --- | --- | --- | --- |
| | | | $M_n \times 10^{-3}$ | $M_w \times 10^{-3}$ |
| Control 1 | SBR | 0 | 95 | 320 |
| 1 | SBR | 2 | 53 | 248 |
| 2 | SBR | 5 | 35 | 182 |
| Control 2 | NBR | 0 | 106 | 364 |
| 3 | NBR | 2 | 93 | 370 |
| 4 | NBR | 6 | Insoluble | |
| Control 3 | NIR | 0 | 130 | 352 |
| 5 | NIR | 2 | 89 | 307 |
| 6 | NIR | 5.5 | 91 | 303 |

Example 4

Using the procedure described in Example 1, natural rubber was treated. The natural rubber was designated as SMR 50 and had a Mooney viscosity (ML 1+4 at 100°C) of 75. The results are shown in Table III together with the results for the controls in which air containing no ozone was supplied for the mastication times shown. It is well known that the molecular weight of natural rubber is reduced on mastication and this is clearly shown by the molecular weight data for Controls 2 and 3 compared to Control 1. The effect on the molecular weight of the presence of the ozone is very clearly evident, the molecular weight of the polymers of the experiments being significantly lower than the molecular weight of the controls.

TABLE III

| Experiment number | Mastication time (hours) | Molecular weight | |
|---|---|---|---|
| | | $M_n \times 10^{-3}$ | $M_w \times 10^{-3}$ |
| Control 1 | 0 | 249 | 757 |
| 1 | 2 | 112 | 375 |
| 2 | 4 | 85 | 252 |
| 3 | 6 | 75 | 213 |
| Control 2 | 2 (No ozone) | 178 | 439 |
| Control 3 | 6 (No ozone) | 147 | 315 |

Example 5

A sample of butyl polymer, containing about 2 weight percent of isoprene and about 98 weight percent of isobutylene, was subjected to a grinding operation to provide small particles of polymer. An extruder equipped with 3 cm co-rotating twin screws, having a total length of about 116 cm, and having an L/D of about 36 and having a hopper for supply of polymer at one end and a slit die attached to the outlet and heating and cooling means along the length of the extruder, was equipped with a gas inlet means at about 23 cm from the inlet. Each screw in the extruder had a combination of feeding and shearing sections along the length of the screw. An ozone generator capable of supplying up to 1.1 kg per day of ozone in air was connected to the gas inlet means of the extruder and provided a stream containing about 0.6 volume percent of ozone in air. Table IV shows the results of the molecular weight data obtained by gel permeation chromatographic analysis for polymer from the outlet of the extruder under the operating conditions shown. Experiment 1 provides molecular weight data for the original polymer, Experiment 2 provides molecular weight data for polymer passed through the extruder with no ozone being supplied and Experiment 3, which is within the scope of the present invention, provides molecular weight data for polymer treated with ozone in the extruder. The reduction in molecular weight is readily apparent for the polymer of Experiment 3.

TABLE IV

| | Experiment | | |
|---|---|---|---|
| | 1 | 2 | 3 |
| Extruder conditions | | | |
| Temperature (°C) | — | 176 | 176 |
| rpm | — | 50 | 50 |
| Polymer feed rate (kg/hr) | — | 1.36 | 1.36 |
| Ozone feed rate (g/hr) | — | — | 19 |
| Molecular weight data | | | |
| $M_n \times 10^{-3}$ | 74 | 43 | 13 |
| $M_w \times 10^{-3}$ | 445 | 448 | 155 |

Example 6

Using essentially similar equipment, the same butyl polymer and the same extruder, the experiments shown in Table V yielded reduced molecular weight polymers having the molecular weight data shown. The results clearly show that the molecular weight of the polymer can be markedly reduced in comparison to that of the original polymer (Experiment 1 of Example 5) and to that of the polymer subjected to the shearing action of the extruder but without ozone present (Experiment 2 of Example 5), the product of Experiment 7 being a fluid polymer which readily flows at room temperature.

TABLE V

| | Experiment | | | |
|---|---|---|---|---|
| | 4 | 5 | 6 | 7 |
| Extruder conditions | | | | |
| Temperature (°C) | 103 | 177 | 181 | 177 |
| rpm | 400 | 200 | 200 | 200 |
| Polymer feed rate (kg/hr) | 1.36 | 2.27 | 2.27 | 1.36 |
| Ozone feed rate (g/hr) | 19 | 29 | 38 | 29 |
| Molecular weight data | | | | |
| $M_n \times 10^{-3}$ | 25 | 19.5 | 12 | 10 |
| $M_w \times 10^{-3}$ | 290 | 220 | 157 | 79 |

## Claims

1. A process for modifying a polymer, to obtain a polymer having a molecular weight lower than the unmodified polymer, which comprises masticating a polymer in, bulk form and selected from rubbery synthetic unsaturated polymers and natural rubber, using rubber mixing and masticating means at from 20 to 220°C while being exposed to, and in contact with, a stream containing from 0.1 to 4% by volume of ozone in air or oxygen.

2. A process according to claim 1, wherein the mastication is conducted in an internal mixer or a mixing extruder.

3. A process according to claim 2, wherein the mastication is conducted in an internal mixer of the Banbury-type of the trough-type equipped with sigma- or Z-blades, or in an extruder having single or twin extruder screws and having mixing and shearing components along the length of the extruder screw.

4. A process according to claim 2 or claim 3, wherein the temperature of the polymer is from 20 to 100°C, if an internal mixer is used, or from 100 to 180°C, if an extruder is used, in which case the extruder has an L/D ratio of not less than 10.

5. A process according to any preceding claim, wherein the unmodified polymer is natural rubber or a polymer comprising $C_4$—$C_6$ conjugated diolefins.

6. A process according to claim 5, wherein the unmodified polymer is polybutadiene, polyisoprene, a polymer of isobutylene and a $C_4$—$C_6$ conjugated diolefin, a brominated or chlorinated polymer of isobutylene and a $C_4$—$C_6$ conjugated diolefin, isobutylene-isoprene-divinylbenzene polymer, an isobutylene-isoprene-2,5-dimethyl-1,5-hexadiene polymer, a polymer of a $C_4$—$C_6$ conjugated diolefin and a vinyl or vinylidene-substituted aromatic hydrocarbon, or a polymer of a $C_4$—$C_6$ conjugated diolefin and a $C_3$—$C_5$ unsaturated nitrile group-containing monomer.

7. A process for modifying a polymer, to obtain a polymer having a molecular weight lower than the unmodified polymer, which comprises masticating natural rubber or a polymer (optionally brominated or chlorinated) of isobutylene and a $C_4$—$C_6$ conjugated diolefin, in bulk form, in an extruder having an L/D ratio of not less than 10, at from 100 to 180°C, while being exposed to, and in contact with, a stream containing from 0.3 to 2% by volume of ozone in air or oxygen.

8. A process according to claim 6 or claim 7, wherein the unmodified polymer is an isobutylene-butadiene, isobutylene-isoprene, isobutylene-piperylene or isobutylene-dimethylbutadiene polymers.

9. A process according to claim 8, wherein the unmodified polymer is of 95 to 99.5% by weight isobutylene and 0.5 to 5% by weight isoprene.

10. A process according to claim 6 or claim 7, wherein the unmodified polymer is a brominated isobutylene-isoprene polymer containing from 92.5 to 98.7% by weight isobutylene, from 0.6 to 3.5% by weight isoprene and from 0.7 to 4% by weight bromine, or a chlorinated isobutylene-isoprene polymer containing from 94.7 to 98.7% by weight isobutylene, from 0.8 to 3.3% by weight isoprene and from 0.5 to 2% by weight chlorine.

11. A process according to any preceding claim, wherein the temperature of the stream containing ozone in air or oxygen is from 15 to 40°C.

## Patentansprüche

1. Verfahren zur Modifizierung eines Polymeren zur Gewinnung eines Polymeren mit einem Molekulargewicht, das niedriger ist als dasjenige des nichtmodifizierten Polymeren durch Verkneten eines Polymeren in Masseform, ausgewählt aus kautschukartigen synthetischen ungesättigten Polymeren und Naturkautschuk, unter Verwendung von Kautschukmisch- und Verknetvorrichtungen bei 20 bis 220°C während es einem Strom ausgesetzt wird und in Kontakt damit steht, der 0,1 bis 4 Volumen-% Ozon in Luft oder Sauerstoff enthält.

6

2. Verfahren nach Anspruch 1, dadurch gekennzeichnet, daß das Verkneten in einem Innenmischer oder in einem Mischextruder durchgeführt wird.

3. Verfahren nach Anspruch 2, dadurch gekennzeichnet, daß das Verkneten in einem Innenmischer des Banbury-Typs oder eines Trogtyps, ausgestattet mit Sigma- oder Z-Schaufeln, oder in einem Extruder mit Einfach- oder Doppelextruderschnecken sowie Misch- und Scherkomponenten längs der Länge der Extruderschnecke durchgeführt wird.

4. Verfahren nach Anspruch 2 oder 3, dadurch gekennzeichnet, daß die Temperatur des Polymeren 20 bis 100°C beträgt, wenn ein Innenmischer verwendet wird, oder 100 bis 180°C beträgt, wenn ein Extruder verwendet wird, wobei in diesem Falle der Extruder ein L/D-Verhältnis von nicht weniger als 10 besitzt.

5. Verfahren nach einem der vorhergehenden Ansprüche, dadurch gekennzeichnet, daß das nichtmodifizierte Polymere Naturkautschuk oder ein Polymeres aus $C_4$—$C_6$-konjugierten Diolefinen ist.

6. Verfahren nach Anspruch 5, dadurch gekennzeichnet, daß das nichtmodifizierte Polymere Polybutadien, Polyisopren, ein Polymeres aus Isobutylen und einem $C_4$—$C_6$-konjugierten Diolefin, ein bromiertes oder chloriertes Polymeres von Isobutylen und einem $C_4$—$C_6$-konjugierten Diolefin, ein Isobutylen/Isopren/Divinylbenzol-Polymeres, ein Isobutylen/Isopren/2,5-Dimethyl-1,5-hexadien-Polymeres, ein Polymeres eines $C_4$—$C_6$-konjugierten Diolefins und eines Vinyl- oder Vinyliden-substituierten aromatischen Kohlenwasserstoffs oder ein Polymeres eines $C_4$—$C_6$-konjugierten Diolefins und eines $C_3$—$C_5$-ungesättigten Nitrilgruppen enthaltenden Monomeren ist.

7. Verfahren zur Modifizierung eines Polymeren zur Gewinnung eines Polymeren mit einem Molekulargewicht, das niedriger ist als das des nichtmodifizierten Polymeren durch Verkneten von Naturkautschuk oder eines Polymeren (gegebenenfalls bromiert oder chloriert) von Isobutylen und einem $C_4$—$C_6$-konjugierten Diolefin in Masseform in einem Extruder mit einem L/D-Verhältnis von nicht weniger als 10 bei 100 bis 180°C während er bzw. es einem Strom ausgesetzt oder in Kontakt damit ist, der 0,3 bis 2 Volumen-% Ozon in Luft oder Sauerstoff enthält.

8. Verfahren nach Anspruch 6 oder 7, dadurch gekennzeichnet, daß das nichtmodifizerte Polymere ein Isobutylen/Butadien-, Isobutylen/Isopren-, Isobutylen/Piperylen- oder Isobutylen/Dimethylbutadien-Polymeres ist.

9. Verfahren nach Anspruch 8, dadurch gekennzeichnet, daß das nichtmodifizierte Polymere zu 95 bis 99,5 Gew.-% aus Isobutylen und zu 0,5 bis 5 Gew.-% aus Isopren besteht.

10. Verfahren nach Anspruch 6 oder 7, dadurch gekennzeichnet, daß das nichtmodifizierte Polymere ein bromiertes Isobutylen/Isopren-Polymeres ist, das 92,5 bis 98,7 Gew.-% Isobutylen, 0,6 bis 3,5 Gew.-% Isopren und 0,7 bis 4 Gew.-% Brom enthält, oder ein chloriertes Isobutylen/Isopren-Polymeres ist, das 94,7 bis 98,7 Gew.-% Isobutylen, 0,8 bis 3,3 Gew.-% Isopren und 0,5 bis 2 Gew.-% Chlor enthält.

11. Verfahren nach einem der vorhergehenden Ansprüche, dadurch gekennzeichnet, daß die Temperatur des Stroms, der Ozon in Luft oder Sauerstoff enthält, 15 bis 40°C beträgt.

**Revendications**

1. Procédé de modification d'un polymère, permettant d'obtenir un polymère ayant un poids moléculaire inférieur à celui du polymère non modifié, qui consiste à triturer un polymère sous forme brute et choisi entre des polymères non saturés synthétiques caoutchouteux et un caoutchouc naturel, en utilisant des dispositifs de mélange et de trituration du caoutchouc à une température de 20 à 220°C tout en l'exposant à, et en le mettant en contact avec un courant contenant 0,1 à 4% en volume d'ozone dans l'air ou l'oxygène.

2. Procédé suivant la revendication 1, dans laquel la trituration est conduite dans un mélangeur interne ou une extrudeuse-mélangeuse.

3. Procédé suivant la revendication 2, dans lequel la trituration est conduite dans un mélangeur interne du type Banbury à auge, équipé de lames sigma ou Z, ou dans une extrudeuse ayant une seule vis ou deux vis et des éléments destinés au mélange et au cisaillement le long de la vis de l'extrudeuse.

4. Procédé suivant la revendication 2 ou la revendication 3, dans lequel la température du polymère est comprise entre 20 et 100°C, si un mélangeur interne est utilisé, ou bien entre 100 et 180°C si une extrudeuse est utilisée, auquel cas l'extrudeuse possède un rapport L/D non inférieur à 10.

5. Procédé suivant l'une quelconque des revendications précédentes, dans lequel le polymère non modifié est un caoutchouc naturel ou un polymère comprenant des dioléfines conjuguées en $C_4$ à $C_6$.

6. Procédé suivant la revendication 5, dans lequel le polymère non modifié est le polybutadiène, le polyisoprène, un polymère d'isobutylène et d'une dioléfine conjuguée en $C_4$ à $C_6$, un polymère bromé ou chloré d'isobutylène et d'une dioléfine conjuguée en $C_4$ à $C_6$, un polymère isobutylène-isoprène-divinylbenzène, un polymère isobutylène-isoprène-2,5-diméthyl-1,5-hexadiène, un polymère d'une dioléfine conjuguée en $C_4$ à $C_6$ et d'un hydrocarbure aromatique à substitution vinyle ou vinylidène, ou un polymère d'une dioléfine conjuguée en $C_4$ à $C_6$ et d'un monomère non saturé en $C_3$ à $C_5$ contenant des groupes nitrile.

7. Procédé de modification d'un polymère, permettant d'obtenir un polymère ayant un poids moléculaire inférieur à celui du polymère non modifié, qui consiste à triturer un caoutchouc naturel ou un polymère (facultativement bromé ou chloré) d'isobutylène et d'une dioléfine conjuguée en $C_4$ à $C_6$, sous forme brute, dans un extrudeuse ayant un rapport L/D non inférieur à 10, à une température de 100 à 180°C, tout en l'exposant à, et en le mettant en contact avec un courant contenant 0,3 à 2% en volume d'ozone dans l'air ou l'oxygène.

8. Procédé suivant la revendication 6 ou la revendication 7, dans lequel le polymère non modifié est un polymère isobutylène - butadiène, isobutylène - isoprène, isobutylène - pipérylène ou isobutylène-diméthylbutadiène.

9. Procédé suivant la revendication 8, dans lequel le polymère non modifié comprend 95 à 99,5% en poids d'isobutylène et 0,5 à 5% en poids d'isoprène.

10. Procédé suivant la revendication 6 ou la revendication 7, dans lequel le polymère non modifié est un polymère isobutylène-isoprène bromé contenant 92,5 à 98,7% en poids d'isobutylène, 0,6 à 3,5% en poids d'isoprène et 0,7 à 4% en poids de brome, ou un polymère isobutylène-isoprène chloré contenant 94,7 à 98,7% en poids d'isobutylène, 0,8 à 3,3% en poids d'isoprène et 0,5 à 2% en poids de chlore.

11. Procédé suivant l'une quelconque des revendications précédentes, dans lequel la température du courant contenant de l'ozone dans l'air ou l'oxygène est comprise entre 15 et 40°C.